Europäisches Patentamt

European Patent Office

Office européen des brevets

(11) Publication number: **0 328 046**
**A1**

(12) **EUROPEAN PATENT APPLICATION**

(21) Application number: **89102095.0**

(22) Date of filing: **08.02.89**

(51) Int. Cl.⁴: **C08L 27/06 , C08K 5/00 , //(C08L27/06,17:00)**

(30) Priority: **12.02.88 US 155322**

(43) Date of publication of application:
**16.08.89 Bulletin 89/33**

(84) Designated Contracting States:
**AT BE CH DE ES FR GB GR IT LI LU NL SE**

(71) Applicant: **W.R. Grace & Co.-Conn. (a Connecticut corp.)**
**Grace Plaza 1114 Avenue of the Americas**
**New York New York 10036(US)**

(72) Inventor: **Deeb, Victor M.**
**81 Fremont**
**Marlboro, Massachusetts 01752(US)**
Inventor: **Hofeldt, Robert H.**
**1 Orchid Drive**
**Littletown, Massachusetts 01460(US)**
Inventor: **Jezowski, John M.**
**14 Old Pewter Lane**
**Wethersfield, Connecticut 06109(US)**

(74) Representative: **UEXKÜLL & STOLBERG**
**Patentanwälte**
**Beselerstrasse 4**
**D-2000 Hamburg 52(DE)**

(54) **Lightweight plastisol coating compositions.**

(57) Sprayable lightweight plastisol-based compositions especially useful as automobile underbody coatings are disclosed. The compositions contain ground rubber (which is substantially inert in the plasticizer and other ingredients) as a lightweight extending filler and are surprisingly resistant to abrasion damage.

# LIGHTWEIGHT PLASTISOL COATING COMPOSITIONS

## Background of the Invention

The present invention relates to lightweight and surprisingly abrasion-resistant plastisol compositions and methods of making the same. The compositions are especially useful as automobile underbody coating compositions. More particularly, the inventive compositions are dispersions of synthetic resins in plasticizers which are filled with finely ground rubber that is substantially inert in the composition.

## Summary of the Invention

Plastisols and organosols are well known materials employed in the automobile industry as underbody coatings. These coatings provide corrosion resistance, road noise suppression and protection from stones and other road debris. Further uses for these materials include the plastisol-based adhesives and gaskets.

Plastisols are known as relatively stable dispersions of extremely finely divided resin powders in plasticizers. If a volatile solvent is included, the plastisol is called an organosol. The resin powders in dispersion fuse or gel upon heating (fluxing) and thereafter cool to form a solid. The solid is preferably tough and elastic when the end use is as an underbody coating.

Poly(vinyl chloride) or PVC plastisols are a particularly well known class of such compositions. PVC plastisols are based on resins selected from vinyl chloride homopolymers and/or copolymers of vinyl chloride and another unsaturated compound such as vinyl acetate, vinylidene chloride or vinyl propionate. As the liquid phase, PVC plastisols are known to employ a plasticizer or a mixture of plasticizers such as these selected from e.g. adipates, sebacates, benzoates, phosphates, phthalates, isophthalates, terephthalates and polyesters. Any particular resin/plasticizer combination (and amounts of each) is chosen by those skilled in the art in view towards obtaining desired properties.

In addition to resin and plasticizer, plastisols for automobile underbody coatings commonly contain one or more fillers, pigments, viscosity modifiers, adhesion promoters and stabilizers. Fillers are exemplified by calcium and magnesium carbonates, talc, clays such as kaolin and China clay, quartz, various fibers and silica. Pigments include titanium dioxide (white), iron oxide (red) and carbon black (black).

Plastisols, in their un-fluxed state, are suited to a wide variety of application techniques. Plastisol coating compositions may be applied to substrates via pouring, dipping, brushing or spraying. Plastisol gasketting materials may be molded, extruded or calendered. Coatings are fluxed after application to the substrate e.g. by baking in an oven at 100 to 175°C for 10 to 90 minutes. Gaskets such as sheet gaskets are produced by pouring the plastisol into a mold, baking, de-molding and then cutting or stamping the desired shape.

Plastisol-based automobile underbody coatings must meet the rigid standards set by various automobile manufacturing companies. A first and now very important requirement for underbody coatings is that they be lightweight. As automobile manufacturers strive for lighter and hence more fuel efficient vehicles, each component of the vehicle has been evaluated to determine the feasibility of reducing weight. Lightweight underbody coatings have now become attractive to the automobile industry.

Another crucial characteristic of underbody coatings is their ability to protect the underlying metal structures. The coatings are relied upon to protect the metal from corrosion by forming a barrier against water and road salt. The moisture-proof barrier provided by the coating must withstand attack from sand, stones and other abrasive road debris if corrosion protection over the life of the automobile is sought. This feature is especially important as the automobile industry lengthens the terms of corrosion and rust-through warranties. While such abrasion resistance can be imparted by incorporating relatively dense mineral fillers in the plastisol, this is contrary to the desire to provide a lightweight product.

A third requirement is that the compositions must be suited for spray application by automated assembly line equipment. As such equipment is already in place at the automobile manufacturing plants, new coating compositions must be tailored to the characteristics of this equipment. One particular requirement is that the sprayable coating composition must not unduly abrade the nozzles, pumps, etc. of the spray equipment. Thus, many mineral fillers have been rejected by the auto industry as too costly when the frequency of nozzle replacement rises.

Finally, underbody coatings are relied upon to help prevent road noise from entering the passenger compartment. Thus, these coatings can contribute to the quiet environment sought by the consumer.

Surprisingly, the ground rubber-filled underbody coating compositions of the present invention exhibit both light weight and excellent abrasion resistance. The exhibited abrasion resistance exceeds that which might be expected from a coating filled with a much harder, heavier filler.

Description of the Preferred Embodiments

The lightweight sprayable underbody coating ("UBC") compositions of the present invention preferably contain, on a total weight basis of the unfluxed plastisol, about 5 to 30% resin, 20 to 40% plasticizer, 0 to 55% conventional filler along with effective amounts of adhesion promoter, viscosity modifier, stabilizer, water scavenger and pigment, and 1 to 30% ground rubber filler.

The ground rubber filler of the present invention may be of natural or synthetic origin and must be substantially inert to the plasticizer and other components of the UBC composition. By substantially inert it is meant that the ground rubber filler particles are not swelled or dissolved by the plasticizer or any other constituent, and further that they do not chemically react with any constituent. Swelling of the filler impairs the viscosity stability (and thus undesirably lowers shelf life) of the plastisol compositions. Preferably, the ground rubber filler employed is previously treated, e.g. vulcanized, such that it is substantially inert in the coating compositions. Reclaimed rubber is particularly preferred in the economic sense, and a substantial number of sources of ground reclaimed rubber, especially ground reclaimed tire rubber, exist. The ground rubber filler contains particles of about 5 to 300 micron diameter with a nominal average diameter of about 50 microns. Other fillers, in addition to the ground rubber filler, may be included in the present compositions. The compositions preferably include a coarse filler and a fine filler, the coarse filler being the ground rubber and the fine filler being selected from one or more fillers conventionally employed in plastisol compositions such as finely divided mineralsincluding but not limited to calcium carbonate, magnesium carbonate, silica, talc, mica and clay, and one or more of hollow fillers including but not limited to glass and plastic microspheres.

In general, we prefer resins based largely on polyvinyl chloride. A particularly preferred resin is a copolymer of vinyl chloride and vinyl acetate having an approximately 5% (weight basis) vinyl acetate content. Phthalate plasticizers are preferred in conjunction with these resins. A particularly preferred plasticizer is a mixture of di(C7 to C9-alcohol) phthalates.

Although conventional plastisols are easily prepared by single-step high speed blending of the various ingredients, the plastisols of the present invention are more difficult to prepare. Spray trials of ground rubber-filled plastisols prepared in the conventional one-step blending process produced unsatisfactory results; the ground rubber filler did not truly disperse in the plastisol and separated out upon spraying. This problem was ultimately overcome, as described below, by a preparation method including a first step of high speed mixing of plasticizer, ground rubber filler and wetting agent, a second step of blending in the remaining solid-phase ingredients such as pigment, water scavenger, stabilizer and fine mineral filler, and a third step of blending in the resin component at low speed to avoid fluxing. Ground rubber-filled plastisol prepared according to this method exhibited excellent sprayability.

The example below illustrates the present invention.

EXAMPLE

A low viscosity (under 50,000 cps) slurry was prepared by blending 3800g. plasticizer (mixture of di(C7 to C9-alcohol) phthalates), 1500g. ground, previously vulcanized rubber filler (nominal 50 micron average particle size), 900g. long chain hydrocarbon viscosity depressant, 196g. wetting agent and 88g. of an adhesion promoter consisting of a polyamide having polyamine functionality ("polyaminoamide"). The slurry was mixed in a Hobart mixer for approximately one hour. This initial step is important to thoroughly wet the ground rubber filler and is performed at a high speed.

The second mixing step involves dispersing the remaining solid ingredients into the low viscosity slurry. 2g. Carbon black, 488g. calcium oxide (water scavenger), 20g. zinc oxide stabilizer and 3418g. calcium stearate-coated calcium carbonate (fine filler, 0.05 micron nominal particle size) were mixed into the slurry at a high speed for thirty to forty five minutes. The resulting mixture was quite stiff and paste-like in consistency.

Finally, 3000g. dispersion grade vinyl chloride/vinyl acetate copolymer (4.9 weight % vinyl acetate content) resin, 2000g. blending grade vinyl chloride/vinyl acetate copolymer (4.9 weight % vinyl acetate content), 1,250g. borosilicate glass microsphere filler (specific gravity 0.46, average size of 70 microns) and 3338g. plasticizer were added to the paste and then blended in at low speed to avoid fluxing the resin. The final viscosity was then adjusted to the desired 53,000 cps by the addition of 100g. additional plasticizer.

The resulting plastisol had a density of 1.15 and exhibited excellent sprayability.

Although the invention has been described in connection with preferred ingredients and amounts thereof, it is not so limited. Modifications, within the scope of the claims, will be apparent to those skilled in the art.

## Claims

1. A sprayable plastisol composition comprising a dispersion of finely divided resin in a plasticizer and ground rubber filler which is substantially inert in said composition.

2. A composition of claim 1 wherein said resin comprises a vinyl chloride polymer.

3. A composition of claim 1 wherein said resin comprises vinyl chloride homopolymer or a copolymer of vinyl chloride and another vinyl compound.

4. A composition of claim 1 wherein said resin comprises a copolymer of vinyl chloride and vinyl acetate.

5. A composition of claim 1 wherein said plasticizer comprises a phthalate plasticizer.

6. A composition of claim 1 wherein said plasticizer comprises a mixture of di(C7 to C9-alcohol) phthalates.

7. A composition of claim 1 further comprising a fine particulate filler.

8. A composition of claim 1 further comprising one or more fine particulate fillers selected from the group consisting of calcium carbonate, magnesium carbonate, talc, clay, silica and mica.

9. A composition of claim 1 further comprising hollow microspheres.

10. A sprayable plastisol composition comprising:
5 to 50 wt.% vinyl chloride polymer;
10 to 50 wt.% plasticizer;
1 to 30 wt.% ground rubber filler which is substantially inert in said composition; and
an effective amount of one or more of adhesion promoter, pigment, water scavenger and viscosity modifier.

11. A composition of claim 10 further comprising about 1 to about 10 wt.% of hollow microspheres.

12. A composition of claim 10 further comprising a fine particulate filler.

13. A composition of claim 12 wherein said filler comprises calcium carbonate, magnesium carbonate, silica, talc, mica or clay.

14. A method of compounding a sprayable, lightweight plastisol composition comprising:
preparing a slurry of ground rubber, plasticizer, and wetting agent;

mixing said slurry to wet substantially all of said ground rubber;
adding to the resulting slurry fine filler to form a paste; and then
blending resin into said paste.

15. A method of claim 14 wherein the ground rubber is substantially inert in the plastisol composition.

16. A method of claim 14 wherein the rubber comprises vulcanized rubber.

17. A method of claim 14 wherein the resin comprises a vinyl chloride polymer.

18. A method of decreasing the density and increasing the abrasion resistance of a plastisol coating composition comprising incorporating a ground rubber filler therein.

19. A method of claim 18 wherein the ground rubber filler is substantially inert in the composition.

20. A method of claim 19 wherein the rubber comprises vulcanized rubber.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 005 084 (E. MERCER) <br> * Claims 1-3; examples 1,2 * <br> --- | 1-3,5, 14 | C 08 L 27/06 <br> C 08 K 5/00 // <br> (C 08 L 27/06 <br> C 08 L 17:00 ) |
| A | GB-A-1 059 428 (GLASURIT-WERKE M. WINKELMANN AG) <br> * Claims 1-10; page 2, lines 1-11,36-42; example 3 * <br> --- | 1-7 | |
| A | CHEMICAL ABSTRACTS, vol. 107, no. 10, 7th September 1987, page 101, abstract no. 79662b, Columbus, Ohio, US; & JP-A-62 79 250 (ACR CO., LTD ASAHI DENKA KOGYO K.K.) 11-04-1987 <br> --- | 1 | |
| X | DE-A-3 008 018 (DEUTSCHE SOLVAY WERKE GmbH) <br> * Claims 6; page 9, lines 18-22 * <br> ----- | 1-5,7,8 ,10 | |

TECHNICAL FIELDS SEARCHED (Int. Cl.4)

C 08 L
C 09 D
B 62 D

The present search report has been drawn up for all claims

| Place of search | Date of completion of the search | Examiner |
|---|---|---|
| THE HAGUE | 19-05-1989 | SCHUELER D.H.H. |